# EUROPEAN PATENT SPECIFICATION

(11) **EP 1 684 961 B1**
(45) Date of publication and mention of the grant of the patent: **02.10.2013**
(21) Application number: 04811075.3
(22) Date of filing: 17.11.2004
(51) Int. Cl.: B29B 9/06, B29B 9/16, B29B 13/02, B29C 31/00, C08G 63/78, C08G 63/80

(54) **METHOD AND APPARATUS FOR MAKING CRYSTALLINE PET PELLETS**
VERFAHREN UND VORRICHTUNG ZUR HERSTELLUNG VON KRISTALLINEN POLYESTERGRANULATEN
PROCEDE ET DISPOSITIF POUR L'ELABORATION DE PELLETS EN PET

(30) Priority: 21.11.2003 US 717630; 01.10.2004 US 954349
(43) Date of publication of application: 02.08.2006
(73) Proprietor: Gala Industries, Inc., Virginia 24085 (US)
(72) Inventor: ELOO, Michael, 46509 Xanten (DE)
(74) Representative: Thoma, Michael
(86) International application number: PCT/US2004/038219
(87) International publication number: WO 2005/051623

(56) References cited:
- EP-A- 0 305 862
- WO-A-03/037588
- DE-A1- 10 209 149
- GB-A- 1 278 297
- US-A- 5 290 913
- US-A- 5 609 892

## Description

### BACKGROUND OF THE INVENTION

### Field of the Invention

The present invention generally relates to a method according to claim 1 and apparatus according to claim 10 for underwater pelletizing and subsequent drying of polyethylene terephthalate (PET) polymers. More specifically, the present invention relates to a method and apparatus for underwater pelletizing PET polymers and subsequent drying of the PET polymer pellets in a manner to self-initiate the crystallization process of the PET particles and produce pellets having a desired level of crystalline structure rather than an amorphous structure.

### Description of the Prior Art

Underwater pelletizing systems for producing pellets of polymeric or other plastic materials has been known for many years. The starting materials such as plastic polymers, coloring agents, additives, fillers and reinforcing agents, and modifiers, are mixed in kneaders. In the process, a melt is produced which is extruded or pressed through dies to form strands which are immediately cut by rotating cutter blades in the water box of the underwater pelletizer. Water with or without additives is continuously flowing through the water box to cool and solidify the polymer strands and pellets and carry the pellets out of the water box through transport piping to a dryer, such as a centrifugal dryer, where the water is removed from the pellets.

For quite some time, the polymer industry has sought to process PET polymers into a pellet shape using underwater pelletizer systems. A major drawback of using underwater pelletizing, as well as other pelletizing systems, for processing PET into pellet shapes is the typically amorphous condition of these pellets when they leave the dryer of the underwater pelletizing system. The amorphous nature of the resulting pellet is caused by the fast cooling of the PET material once introduced into the water flow in the water box of underwater pelletizer and while the water and pellet slurry is being transported by appropriate piping to the dryer.

Typically, increasing the water flow through the water box of the underwater pelletizer and increasing the water temperature, along with pipe dimensional changes and reducing the distance between the pelletizer and dryer unit, does not help to sufficiently maintain the pellet temperature. Under such circumstances, the PET pellets still leave the dryer at a temperature, usually below 100° C, which is below the temperature at which crystallization can occur.

End users of PET polymer pellets typically require that the pellets be in a crystalline state, rather than an amorphous state, principally for two reasons, both relating to the fact that the end user wants to process the PET pellets in a substantially dry condition, with zero or near zero water content. First, PET polymers are very hygroscopic, and crystalline PET pellets absorb considerably less moisture during shipment and storage than amorphous PET pellets. Accordingly, crystalline PET pellets can be dried to the requisite zero or near zero moisture content more easily by the end user. Second, the temperature required to completely dry PET polymers is higher than the temperature at which amorphous PET pellets convert to the crystalline form. Therefore, when drying amorphous PET pellets, it is necessary to first achieve crystallization at the requisite lower temperature before raising the temperature to the drying temperature. Otherwise, the amorphous PET polymer pellets may agglomerate and destroy the pellet form.

As a result, manufacturers of PET pellets must typically subject the amorphous PET pellets to a secondary heating step of several hours at very high temperatures, usually in excess of 80 to 100°C, to change the amorphous structure of the pellets to a crystalline structure. This is a very expensive second step in order to convert the PET polymer pellets into the desired crystalline state.

However, it is recognized by the end users and manufacturers of PET pellets that total (100%) crystallinity of the PET pellets is not necessarily required in order to dry the PET pellets for further processing or use in the Solid State Process (SSP). Rather, a total crystallinity, or crystallinity grade using the Calcium Nitrate measurement method, above 30%, and preferably above 40%, is acceptable for the PET end users. One known SSP method and apparatus for making PET cyrstalline pellets using an underwater pelletizer and SSP reactor is shwon in WO 03/037588 and its corresponding U.S. patent application, Pub. No. US 2005/0062186. WO 03/037 588 discloses the preamble of claim 1.

An alternative approach is disclosed in WO 2004/033174 in which the polymer is granulated or pelletized in a water bath at a temperature of more than 100°C. The resulting pellets may be further treated in the water bath for a defined period of time thereafter, while retaining the high temperature, in order to convert the amorphous material into a crystalline material. This system requires pressurization to maintain the water at the super-boiling point temperature, followed by a pressure reduction procedure.

It is also known generally that air can be injected into the exit stream of a water and pellet slurry from a pelletizer in order to enhance the transport of the water/pellet slurry. See, for example, U.S. Patent No. 3,988,085 and DE 102 09 149. Additional prior art relevant to the present invention is shown in US 5 609 892, GB 1 278 297 and US 5 290 913. US 5 609 892 discloses the preamble of claim 10.

### SUMMARY OF THE INVENTION

The present invention is directed to an underwater pelletizing system that produces PET pellets in a hot enough condition to self-initiate the crystallization process therein and ultimately provide a sufficiently crystalline character such that the PET pellets do not require a separate heating step in order to undergo end user processing. It has been discovered that this elevated heat condition can be accomplished by reducing the residence time of the pellets in the water slurry in order to leave enough heat in the PET pellets during the drying stage so that the crystallization process is initiated from inside the pellets. To do this, it is necessary to separate the pellets from the water as soon as possible and to significantly increase the speed of pellet flow from the exit of the underwater pelletizer and into and through the dryer. The hot pellets leaving the dryer can then be carried on a conventional vibrating conveyor or other vibrating or handling equipment for a time sufficient to achieve the desired crystallinity and avoid agglomeration. The hot pellets can also be stored in a heat retaining condition, such as in a heat insulating container, to complete the desired crystallization process. For example, coated steel or plastic containers should be acceptable, instead of the stainless steel boxes conventionally used.

The early pellet/water separation and increased pellet speed through the pelletizer system is accomplished in accordance with the present invention by injecting air or other suitable gas into the transportation piping leading from the pelletizer to the dryer just after the cut pellets and water slurry exit the water box of the pelletizer unit. It has been found that the injected air serves to separate the water from the pellets in the transportation piping by converting the water to a water vapor mist, significantly speeds up the transport of the pellets to and through the dryer, and can serve to generate a pellet temperature exiting the dryer that is sufficiently high to initiate the crystallization process within the pellets. Specifically, while the PET polymer pellets may come out of the dryer in an amorphous condition, there is still sufficient heat remaining inside the pellets for crystallization to occur. The extent of the crystallization is sufficient to eliminate the necessity of the second heating stage heretofore required to make PET pellets using previous underwater pelletizing systems.

The air introduced into the slurry line leading to the dryer immediately after the exit from the water tank is at a very high velocity. It has been found that a flow rate of from at least 100 cubic meters (m³) /hour, to about 175 m³/hour, or more, through a valve at a pressure of 8 bar and into a 1.5 inch slurry pipe line produces the requisite air velocity for the present invention. The volume of air introduced into the exiting water and pellet slurry produces an overall gas/slurry mixture in the nature of a mist and is likely to have a gas component of 98% - 99% or more by volume of the overall mixture. The air injection into the slurry line dramatically increases the speed of the pellet flow from the water box to the exit of the dryer to a rate less than one second. While air is the preferred gas in view of its inert nature and ready availability, other inert gases such as nitrogen or similar gases could be used. Other pellet speed expediting methods that would comparably separate the liquid water from the pellets and accelerate the pellets from the pelletizer to the dryer exit might also be employed.

The slurry piping preferably includes a ball valve or other valve mechanism after the air injection point. The ball valve allows the operator to better regulate the residence time of the pellets in the piping and dryer, and serves to significantly reduce or eliminate any vibrations in the slurry pipe to the dryer. The ball valve or valve mechanism also appears to provide an improved water vapor mist condition in the slurry pipe downstream of the valve mechanism.

It has been found that crystalline PET pellets can be formed in accordance with the method and apparatus of the present invention if the residence time of the pellets from the point of formation by the cutter blades at the die face to the exit from the centrifugal dryer is sufficiently reduced by the injection of high velocity air or other gas into the slurry line. While larger pellets lose their heat more slowly so as to retain a high enough temperature upon exit to undergo crystallization at lower injected air velocities, such as 100 m³/hour, as the air velocity increases smaller pellets with a lower exit temperatures also exhibit acceptable levels of crystallization. Hence, the rapid separation of the pellets from the water and the shortened residence time assures that the PET pellets exit the dryer of the underwater pelletizing system while retaining sufficient heat inside the pellets to achieve the desired crystallization in the amorphous pellets, particularly if the pellets are transported from the dryer by a heat-retaining vibrating conveyor for a time sufficient to achieve the desired level of crystallinity, and/or properly stored in a heat insulating container. As a result, the necessity of a secondary heating step is eliminated.

When transported away from the dryer in a vibrating conveyor, it has been found that transport for a time from about 20 seconds to about 90 seconds, or more, is sufficient to achieve the desired crystallinity. The preferred transport time is about 30 second to 60 seconds, and the most preferred is about 40 seconds.

Accordingly, it is an object of the present invention to provide a method and apparatus for processing PET polymers in an underwater pelletizing system which can produce crystallization in the PET pellets that exit from the dryer.

It is another object of the present invention to provide a method and apparatus for producing crystallization in PET polymer pellets utilizing an underwater pelletizing system without the necessity of an expensive secondary heating stage to convert amorphous PET pellets to crystalline PET pellets.

It is a further object of the present invention to provide a method and apparatus for the underwater pelletizing of PET polymer in which an inert gas is injected into the water and pellet slurry exiting the pelletizer to produce a water vapor mist form of slurry handling, thereby providing better heat retention in the transported pellets.

A still further object of the present invention is to provide a method and apparatus for underwater pelletizing of PET polymer in accordance with the preceding object in which the pellets are rapidly transported through the equipment through the injection of air at a flow rate of at least 100 m³/hour, to about 175 m³/hour or more, so that the residence time of the pellets before exiting the dryer is sufficiently reduced to generate crystallization on the order of 30% - 40% of total (100%) crystallization.

It is yet another object of the present invention to provide a method and apparatus for producing PET polymer pellets using an underwater pelletizing system in which the pellets exiting the dryer have sufficient heat remaining inside the pellets for at least 35% total crystallization of the PET pellets to occur without subsequent heating.

It is still a further object of the present invention to provide an underwater pelletizing method and apparatus for producing PET pellets in which the residence time of the PET pellets from the time of extrusion at the die face until exit from the centrifugal dryer is reduced to less than about one second by gas injection into the slurry line from the pelletizer to the dryer.

A still further object of the present invention is to provide an underwater pelletizing method and apparatus for producing PET pellets in accordance with the preceding object in which the residence time is regulated using a valve mechanism for improved pressurization of the water vapor mist downstream of the valve in the slurry line.

It is another object of the present invention to provide an underwater pelletizing system in which the hot pellets exiting the dryer are carried on a vibrating conveyor or other vibrating or handling equipment to achieve virtually uniform crystallization throughout a given output pellet volume.

These together with other objects and advantages which will become subsequently apparent reside in the details of construction and operation of the invention as more fully hereinafter described and claimed, reference being had to the accompanying drawings forming a part hereof, wherein like numerals refer to like parts throughout.

### BRIEF DESCRIPTION OF THE DRAWINGS

Figure 1 is a schematic illustration of an underwater pelletizing system, including an underwater pelletizer and centrifugal dryer as manufactured and sold by Gala Industries, Inc. ("Gala") of Eagle Rock, Virginia, with air injection and vibrating conveyor in accordance with the present invention.
Figures 2A and 2B are schematic illustrations of side and end views, respectively, of the vibrating conveyor of Figure 1.
Figure 3 illustrates certain components of the underwater pelletizing system shown in Figure 1 during a bypass mode when the process line has been shut down.
Figure 4 is a schematic illustration showing a preferred method and apparatus for air (or gas) injection into the slurry line from the pelletizer to the dryer in accordance with the present invention.
Figure 5 is a schematic illustration showing a preferred method and apparatus for air (or gas) injection into the slurry line from the pelletizer to the dryer with a ball valve in the slurry line, in accordance with the present invention.

### DETAILED DESCRIPTION OF THE INVENTION

In describing the preferred embodiments, terminology will be resorted to for the sake of clarity. It is intended that each term contemplates its broadest meaning as understood by those skilled in the art and includes all technical equivalents which operate in a similar manner to accomplish a similar purpose. For example, the term "water" includes not only water itself, but also water with one or more additives included, which are added to the water during the underwater pelletizing step for various purposes used by those skilled in the art of underwater pelletizing.

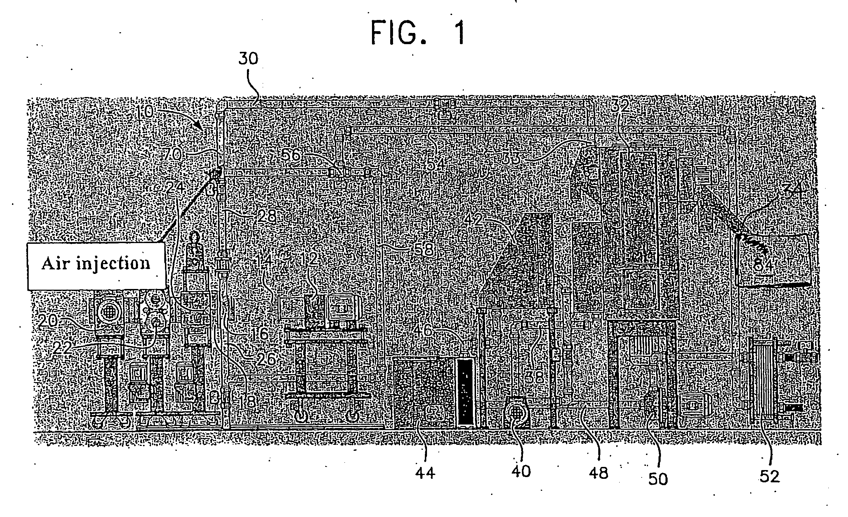

An underwater pelletizing system for use in association with the present invention is schematically shown in Figure 1 and is generally designated by reference number 10. The system 10 includes an underwater pelletizer 12, such as a Gala underwater pelletizer, with cutter hub and blades 14 shown separated from the water box 16 and die plate 18. In the underwater pelletizing system 10, PET polymer is fed from above from a polymer vat (not shown) into a screen changer 20 which removes any solid particles or other material. The PET polymer is then fed through gear pump 22 to control and maintain a smooth flow of the polymer into the polymer diverter 24 and die plate 18. The PET polymer is typically extruded through holes in the die plate at a temperature of about 260° C. The PET polymer strands formed by the die holes enter into the water box 16 and are cut by the cutter hub and blades 14 into the desired pellets. Cold water flows into the water box 16 through pipe 26 and the water and cut pellet slurry exits through pipe 28.

The water and pellet slurry is then conveyed through the slurry line 30 into a dryer 32, such as a Gala centrifugal dryer, at inlet 33. The pellets are dried in the dryer 32 and exit the dryer at 34. The water removed from the dried pellets exits the dryer 32 through pipe 38 and is conveyed by pump 40 into a fines removal sieve 42 and thence into a water tank 44 through pipe 46. The recycled water leaves water tank 44 through pipe 48 and pump 50 into a water heat exchanger 52 to reduce the water temperature. The cooled water is recycled through pipe 54 past bypass valve 56 and pipe 58 to inlet pipe 26 and then into the water box 16.

In accordance with the present invention, air is injected into the underwater pelletizing system in slurry line 30 at point 70, preferably near the beginning of the slurry line 30 adjacent the exit from the water box 16, in order to enhance the transport of PET pellets in the slurry line 30 and keep the PET pellets at a high enough temperature to foster the desired crystallization.

The air is conveniently injected into the slurry line 30 at point 70 using a conventional compressed air line typically available in most manufacturing facilities, such as with a pneumatic compressor, and a standard ball valve sufficient to produce a high velocity air flow in the slurry line 30. This is readily achieved by a flow rate of at least 100 m³/hour through a standard ball valve at a pressure of 8 bar into a slurry line comprising a standard 1.5 inch pipe. This high velocity air (or other gas) when contacting the water and hot pellets generates a water vapor mist. The pellets tend to disperse to the inside circumference of the pipe as they move rapidly therethrough to the dryer. It is estimated that the volume of air in the overall gas/slurry mixture is on the order of 98% - 99% or more by volume of the overall mixture. The air injected into the slurry line 30 at point 70 increases the speed of the pellet flow from the water box 16 to the exit 34 of the dryer 32 to a rate of less than one second.

The mean temperature of the PET polymer pellets exiting the dryer 32 at 34 in accordance with the present invention should be above about 145° C at flow rate of 100 m³/hour, but may be lower when the flow rate is increased to 175 m³/hour. With such high velocity pellet speed expediting action, the PET pellets retain sufficient heat inside the pellets to initiate crystallization therein, without the necessity of a secondary heating step.

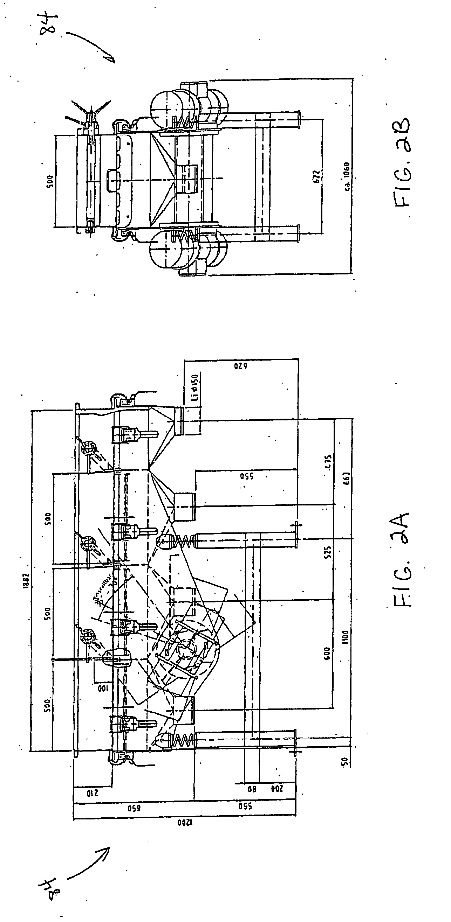

Pellets exiting the dryer are preferably directed through a vibration unit, such as vibrating conveyor 84, as shown in Figures 2A and 2B. Through agitation and mixing of the crystallizing pellets in the vibration conveyor 84, variations in the temperatures of pellets which might otherwise occur through proximity of individual pellets to a containment wall versus immersion amongst other pellets, for instance, are avoided. Instead, uniformity in temperature and in the resulting degree of crystallization is greatly improved. In addition, stickiness resulting from the elevated pellet temperatures is countered through the jostling and relative movement of the pellets which prevents any clumping or adherence of the pellets to the surrounding wall structure.

For crystallization purposes, it is has been found that the pellets should remain in the vibration conveyor between about 20 and about 90 seconds, or more, preferably between about 30 and about 60 seconds, and most preferably about 40 seconds. During this time, sufficient heat is retained by the vibration conveyor to maintain the pellets at a high enough temperature to complete the desired crystallization. Larger pellets having an exit temperature on the order of 145° due to their greater mass may require only 10 seconds at that temperature within which to achieve 40% crystallization. With their smaller mass and relatively greater surface area, smaller pellets having a cooler exit temperature of about 127°C may require 20 seconds at that temperature to complete the desired crystallization. The remaining time in the vibrating conveyor allows the pellets to cool to a greater or lesser extent.

If additional cooling is required due, for example, to the operator's inability to store, use or transport heated pellets from the exit of the vibration conveyor, then air blowers may be added at such exit or the vibration conveyor may be designed to provide a residence time of up to approximately two minutes. Generally, the temperature of the pellets is about 128°C at the entrance to the vibration conveyor, and between 60°C and 110°C at the exit thereof, depending upon whether or not the operator has provided for additional pneumatic cooling directly on the conveyor in order to output pellets that are fully cooled for handling purposes (60°C) or instead requires only that the pellets be crystalline (110°C) upon leaving the vibrating conveyor. The preferred exit temperature for most purposes is less than 80°C, while a higher surface tack temperature (<100°C) is sufficient for some grades of PET polymer.

If a vibrating unit is not used, or in addition to the vibrating unit, the PET polymer pellets exiting the dryer 32 can be placed in appropriate heat insulating containers so that the retained heat in the PET pellets is sufficient to complete the desired crystallization process, before the pellets cool below the crystallization temperature.

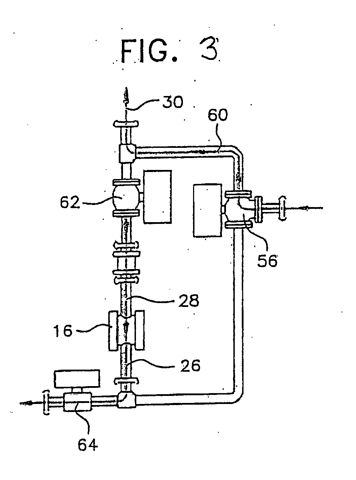

In by-pass mode shown in Figure 3, the recycled water goes through bypass 56 into pipe 60 and then into slurry line 30. In the bypass mode, the valve 62 is closed and the water/pellet slurry in line 30 and water box 16, along with the water in inlet line 26 can drain from the system out of drain valve 64.

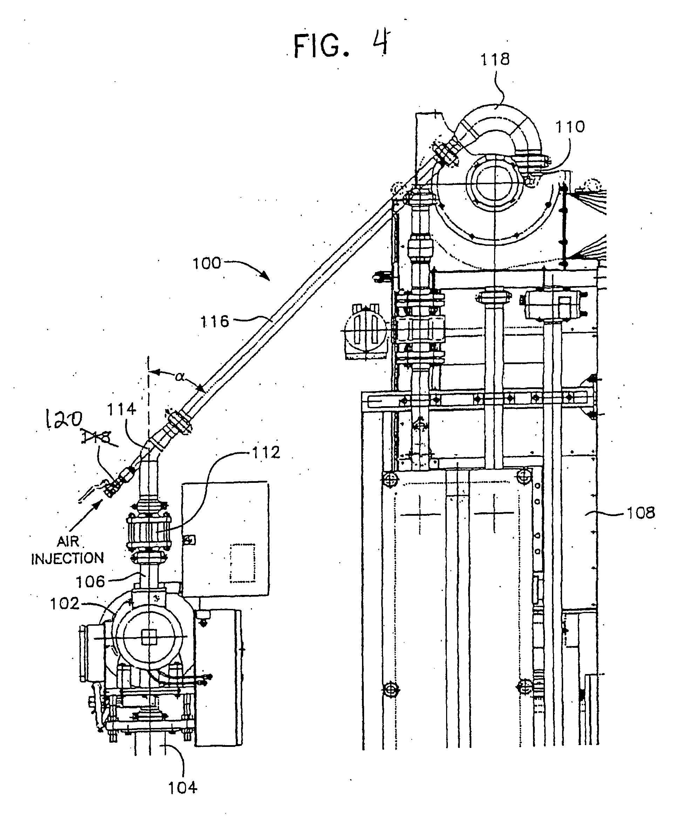

Figure 4 schematically illustrates one preferred arrangement for air injection into the slurry line of an underwater pelletizing system in accordance with the present invention and is generally designated by reference numeral 100. The underwater pelletizer 102 illustrated is a Gala Model No. A5 PAC 6, with water inlet pipe 104 and slurry exit line 106. The dryer 108 illustrated is a Gala Model No. 12.2 ECLN BF, with the slurry entrance 110 at the top. Inasmuch as the exit from the underwater pelletizer 102 into slurry line 106 is significantly below the entrance 110 to the centrifugal dryer 108, when both are level on a manufacturing floor, it is necessary to transport the water and pellet slurry upwardly from the pelletizer exit to the dryer entrance. The water and pellet slurry thus moves through valve 112 past angled elbow 114, through angled slurry line 116, past enlarged elbow 118 and then into the entrance 110 of dryer 108. The air injection is past nozzle or valve 120 and directly into the angled elbow 114.

As shown in Figure 4, the angled slurry line 116 is preferably straight and has an enlarged elbow 118 at its exit end. The enlarged elbow facilitates the transition of the high velocity water and pellet slurry from the straight slurry line 116 into the dryer entrance 110 and reduces potential agglomeration into the dryer 108. Further, the air injection into the angled elbow 114 is preferably in line with the axis of slurry line 116 to maximize the effect of the air injection on the water and pellet slurry and to keep constant aspiration of the air/slurry mixture.

While the angle between the vertical axis of slurry line 116 and the longitudinal axis of angle slurry line 116 is most preferably about 45°, as shown in Figure 4, a preferred range is 30° - 60°. Moreover, the angle can be varied from 0° to 90°, and even more in the event the water and pellet slurry exit from pelletizer 102 is higher than the entrance 110 to dryer 108 when, for example, the pelletizer and dryer are placed at different levels in the plant or the heights of the components are different than shown in Figure 4.

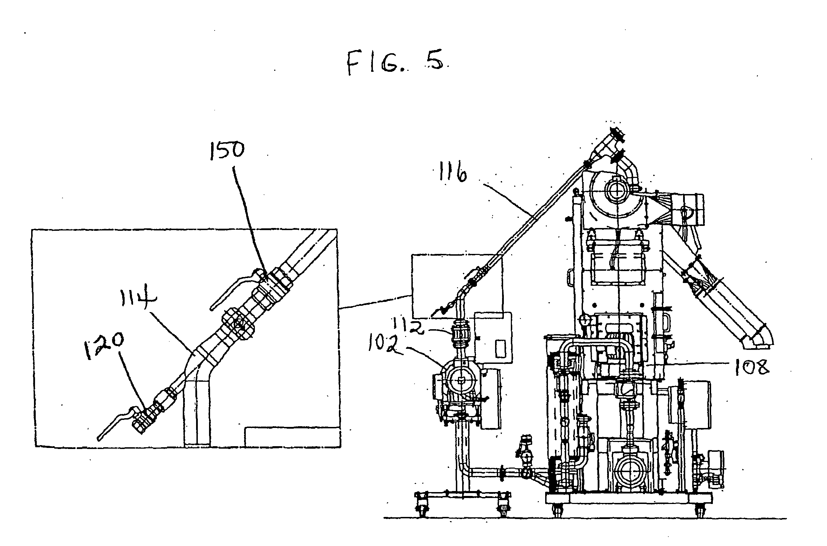

With the air injection as described, the residence time of the pellets from the water box to the exit is less than one second which has been found to produce pellets with the desired crystallization. However, in another preferred embodiment, a second ball valve or valve mechanism 150 is positioned after the air injection point, as shown in Figure 5. The valve mechanism 150 serves to better regulate the residence time of the pellets within the slurry line while retaining sufficient head pressure on the cutting chamber. This second valve mechanism not only provides for regulating the residence time of the pellets in the slurry line but also reduces vibration in the slurry pipe significantly. In addition, the resulting pressurization of the air injected chamber seems to improve the water vapor mist generated in the slurry pipe downstream, enhancing the results obtained with smaller pellets in particular.

### TRIAL EXAMPLES

### FIRST TRIAL SET

Molten PET polymer was continuously extruded into an overall underwater pelletizing system as illustrated in Figure 1, using a Gala Underwater Pelletizer Model No. A5 PAC 6 and a Gala Model 12.2 ECLN BF Centrifugal Dryer, in the arrangement shown in Figure 3. The melt temperature was about 265° C and the cutter blade speed in pelletizer 102 was varied between 2500 and 4500 RPM. The die plate was typical for PET polymers and a typical 3.5 mm die plate with elongated lands was used. The melt velocity through the die holes during the trials was constant at 40 kg/hole/hr.

The pipe for slurry line 116 was a standard 1.5 inch pipe and its length was 4.5 meters. The speed of centrifugal dryer 108 was kept constant during the trials, and the countercurrent air flow through the dryer 108 was also kept constant during the trials. A vibrating unit was not used.

The air injection flow rate to nozzle or valve 120 was varied from 0 to a maximum of 100 m³/hour, as indicated in Table 1 below, and the water flow and pellet size also varied, again as indicated in Table 1 below.

The parameters and results of the first set of trials are set forth in Table 1 below.

**TABLE 1**

| Trial | Pellet size (mm) | Weight of a pellet (g) | Water - temp (°C) | Water rate (m³/h) | Air injection rate (m³/h) | Pellet temp (°C) | Crystallinity grade (%) |
|---|---|---|---|---|---|---|---|
| 1 | 5.5 x 3.0 | 0.032 | 76 | 13 | 100 | 155 | 98 |
| 2 | 4.5 x 3.0 | 0.0299 | 74 | 13 | 100 | 152 | 98 |
| 3 | 4.5 x 3.0 | 0.0306 | 71 | 19 | 0 | 105 | 0 |
| 4 | 4.0 x 2.6 | 0.0185 | 64 | 19 | 100 | 130 | 60 |
| 5 | 3.5 x 3.0 | 0.0256 | 69 | 18 | 100 | 136 | 80 |
| 6 | 4.1 x 3.1 | 0.0267 | 73 | 18 | 100 | 146 | 98 |

The pellet temperature and percentage crystallinity as set forth in the last two columns of Table 1 were determined by examining the product coming out of the dryer 108 at the end of each trial. Specifically, when the pellets were visually inspected it was determined approximately how many of 100 pellets had undergone a color change indicating transformation to a more crystalline state. For example, in trial 5, about 80 out of 100 pellets indicated a color change. Temperature of the pellets was also determined on a surface basis using an infrared temperature gauge. The extent to which the pellets may have been "totally" crystallized, with "total" crystallization indicating a state in which each pellet is fully crystalline throughout its individual structure, could not be determined using these external measuring techniques. However, for practical application the pellets were found to be sufficiently crystallized for the purposes of PET end users, effectively demonstrating at least 30-40% crystallization during subsequent testing, with no need for any additional heating/crystallizing processing.

At an air injection flow rate of 100 m³/hour, it is preferred that 135°C be the minimum temperature for PET polymer pellets to leave the dryer, when the pellets have the sizes used in the above tests. However, adequate crystallization at lower exit temperatures may be obtained with this invention if smaller size PET pellets are made, provided the air injection velocity is increased.

### SECOND TRIAL SET

Molten PET polymer was continuously extruded into an overall underwater pelletizing system as illustrated in Figure 1, using a Gala Underwater Pelletizer Model No. A5 PAC 6 and a Gala Model 12.2 ECLN BF Centrifugal Dryer, in the arrangement shown in Figure 3. The melt temperature was about 265° C and the cutter blade speed in pelletizer 102 was varied between 2500 and 4500 RPM. The die plates used were typical for PET polymers. In order to be able to work with different pellet sizes, die hole diameters and die hole velocities were varied as well as cutter speeds. The pipe for slurry line 116 was a standard 1.5 inch pipe and its length was 4.5 meters. The speed of centrifugal dryer 108 was kept constant during the trials, and the countercurrent air flow through the dryer 108 was also kept constant during the trials. A vibrating conveyor 84 was used to receive the pellets exiting the dryer.

The air injection flow rate to nozzle or valve 120 was varied from 0 to a maximum of 175 m³/hour, as indicated in Table 2 below, and the water flow and pellet size also varied, again as indicated in Table 2 below.

The parameters and results of the second set of trials are set forth in Table 2 below.

**TABLE 2**

| Sample | Pellet size (mm) | Weight of a pellet (g) | Water - temp (°C) | Water rate (m³/h) | Air injection rate (m³/h) | Pellet temp (°C) | Amount of A-C pellets [%] A = amorphous C = crystalline | Crystallinity grade (%) |
|---|---|---|---|---|---|---|---|---|
| 10 | 3.5 x 2.6 | 0.015 | 77 | 20 | 175 | 147 | 100% C | 43.1 |
| 11 | 2.5 x 3.5 | 0.015 | 78 | 22 | 0 | 107 | 10% C | 6.9-30.9 |
| 11 | 3.5 x 2.5 | 0.015 | 78 | 22 | 0 | 107 | 90% A | 3.5 |
| 12 | 2.7 x 2.7 | 0.015 | 78 | 17 | 175 | 129 | 100% C | 43.9 |
| 13 | 2.4 x 3.0 | 0.015 | 78 | 24 | 0 | 109 | 12% C | 10.8-35.6 |
| 13 | 2.4 x 3.0 | 0.015 | 78 | 24 | 0 | 109 | 88% A | 3.7 |
| 14 | 2.6 x 3.1 | 0.012 | 78 | 22 | 175 | 128 | 100% C | 44.1 |
| 15 | 2.6 x 3.1 | 0.012 | 78 | 25 | 0 | 95 | 100% A | 3.3 |
| 16 | 2.0 x 2.7 | 0.011 | 72 | 20 | 175 | 123 | 100% C | 38.9 |
| 17 | 2.4 x 2.4 | 0.010 | 75 | 25 | 175 | 117 | 100% C | 43.0 |
| 18 | 2.2 x 2.2 | 0.008 | 79 | 24 | 175 | 116 | 98% C | 38.9 |

Samples 10 and 11 were run under the same conditions except that Sample 10 was conducted with air injection at a rate of 175 m³/hour and Sample 11 was conducted without any air injection. Similarly, Samples 12 and 13, and Samples 14 and 15, were conducted on the same conditions with respect to each pair, with the exception of the air injection. Samples 16, 17 and 18 had no corresponding tests in the absence of air because the pellet size was too small for effective processing without air injection.

From the results in the second trial set, it can clearly be seen that the air injection method is essential to maintain a crystalline pellet, specifically when trying to achieve pellet weights below 0.015 g/pellet which, in the majority of cases, is the customer target. As compared to the first trial set which, when summarized in copending application, Serial No. 10/717,630 incorporated herein concluded that a minimum exit temperature was required, the results of the second trial set have clarified the significance of the air injection velocity to achieving the desired crystallinity.

The pellet temperature and percentage crystallinity as set forth in the second and third to right-most columns of Table 2 were determined by visual examination and using an infrared temperature gauge, both as described above in connection with the first trial set. Subsequent to the time at which the first trial set was conducted, however, it was determined that total crystallinity, or crystallinity grade, can be measured using the Calcium Nitrate measurement method. The right-most column shows the results of such an evaluation.

With the air injection method according to the present invention, PET pellets of various sizes can be produced with an acceptable crystallinity grade. This is even possible with pellet weights as low as 0.008 g/pellet provided the air is injected at a high enough velocity. By contrast, using prior art operating devices for pelletizing technology including those using extremely short pipe runs and very high water flows, only a certain percentage, approximately 10 - 12%, of crystalline pellets can be produced. These so-produced pellets, however, contain significant variation in crystallinity from about 6.9% to up to 35.6%. This limited degree of homogeneity within the pellets is not acceptable. Furthermore, if the pellet size is reduced to 0.012 g/pellet or below, only by the air injection method of the present invention was it possible to produce a yield in which 100% of the pellets were crystallized at least to a 35% grade of crystallinity. PET with a crystallinity percentage of greater than 35% has been found to be crystalline enough for the Solid State Process (SSP) and therefore is acceptable for the PET end users.

As summarized above, the first and second trial sets were conducted with air flow rates of 100 m³/hour and 175 m³/hour, respectively. Higher air flow rates on the order of 200 m³/hour or higher can also be used, as required by water flow and pellet rate changes.

While the present invention is particularly applicable to the underwater pelletization of PET polymers, it is believed that other polymers which crystallize at elevated temperatures and which retain heat when subjected to high temperatures may also be appropriate for the present invention. Such polymers include certain grades of thermoplastic polyurethane (TPU), PET copolymers and/or PET blends.

The foregoing is considered as illustrative only of the principles of the invention. Since numerous modifications and changes will readily occur to those skilled in the art, it is not desired to limit the invention to the exact construction and operation shown and described. Accordingly, all suitable modifications and equivalents may be resorted to, falling within the scope of the invention.

## Claims

1. A method for processing PET polymers into crystalline PET pellets including the steps of extruding strands of PET polymer through a die plate (18) into an underwater pelletizer (12,102), cutting the PET polymer strands into pellets in said pelletizer, transporting said PET pellets out of said pelletizer and into a dryer (32,108) as a water and pellet slurry and drying said PET pellets in said dryer, **characterized in that** said step of transporting said PET pellets includes injecting a high velocity inert gas into said water and pellet slurry to enhance the speed of said pellets into and out of said dryer and to cause said PET pellets exiting said dryer to have sufficient internal heat to self-crystallize said pellets.

2. The method as claimed in claim 1, **characterized in that** said PET pellets exiting said dryer are kept in motion by a vibrating unit (84) during which said PET pellets continue self-crystallization.

3. The method as claimed in claim 1, **characterized in that** said injecting of the high velocity inert gas into said water and pellet slurry converts the water into a water vapor mist.

4. The method as claimed in claim 1, **characterized in that** said PET pellets exit said dryer at a mean temperature above about 125°C, and preferably above 135°C.

5. The method as claimed in claim 1, **characterized in that** said gas is injected into said water and pellet slurry at a velocity of at least 100m³/hr, and preferably about 175m³/hour.

6. The method as claimed in claim 1, **characterized in that** said gas is air injected at a velocity of between about 100-175m³/hour.

7. The method as claimed in claim 1, **characterized in that** said gas is injected into said water and pellet slurry substantially in alignment with a line of travel of said slurry.

8. The method as claimed in claim 7, **characterized in that** said line of travel of said slurry turns at an angle between 30° and 60° and said gas is injected at said turn.

9. The method as claimed in claim 6, **characterized in that** said residence time of said pellets in said slurry line is regulated by a ball valve (150) downstream of said air injection.

10. An apparatus for processing PET polymers into self- crystallized pellets including an underwater pelletizer (12,102) to cut PET polymer strands extruded into said pelletizer into pellets, piping (26,104) to introduce water into said pelletizer and a slurry line (28,30,106,116) to transport a water and pellet slurry out of said pelletizer and into a dryer (32,108), **characterized in that** an injector (120) introduces high velocity inert gas into said water and PET pellet slurry line (116) to separate the water from the pellets in the piping and enhance the speed of said pellets into and out of said dryer and to cause said PET pellets exiting said dryer to have sufficient internal heat to self-crystallize said pellets.

11. The apparatus as claimed in claim 10, **characterized in that** said high velocity inert gas converts the water in said slurry line to a water vapor mist.

12. The apparatus as claimed in claim 10, **characterized in that** said injected high velocity inert gas is at a velocity of between about 100-175 m³/hour.

13. The apparatus as claimed in claim 10, **characterized in that** said dryer is a centrifugal dryer.

14. The apparatus as claimed in claim 13, **characterized in that** a post pelletizer unit (84) receives pellets from an outlet (34) of said dryer to further said self-crystallization.

15. The apparatus as claimed in claim 14, **characterized in that** said post pelletizer unit (84) is a vibration unit, preferably a vibrating conveyor, that keeps said pellets in movement during said crystallization.

16. The apparatus as claimed in claim 14, **characterized in that** said post pelletizer unit (84) is a heat insulating container.

17. The apparatus as claimed in claim 10, **characterized in that** a portion of said slurry line is straight and angled upwardly at an angle between 30° and 60°.

18. The apparatus as claimed in claim 10, **characterized in that** said slurry line includes a straight portion (116) and said gas injector (120) introduces said inert gas at a beginning of said straight portion, and a ball valve (150) serves to regulate residence time of the pellets in said apparatus.

19. The apparatus as claimed in claim 10, **characterized in that** said gas injector (120) introduces said inert gas into said water and pellet slurry substantially in alignment with a longitudinal axis of a slurry line straight portion (116).

20. The apparatus as claimed in claim 10, **characterized in that** a ball valve (150) downstream of said gas injector (120) regulates residence time of the PET pellets in said apparatus.

## Patentansprüche

1. Verfahren zum Verarbeiten von PET-Polymeren zu kristallinem PET-Granulat, welches die Schritte des Extrudierens von Strängen von PET-Polymer durch eine Lochplatte (18) in einen Unterwassergranulator (12, 102), des Schneidens der PET-Polymerstränge in dem Granulator zu Granulat, des Beförderns des PET-Granulats aus dem Granulator und in einen Trockner (32, 108) als Wasser- und Granulatschlicker und des Trocknens des PET-Granulats in dem Trockner umfasst, **dadurch gekennzeichnet, dass** der Schritt des Beförderns des PET-Granulats das Einspritzen eines reaktionsträgen Gases hoher Geschwindigkeit in den Wasser- und Granulatschlicker umfasst, um die Geschwindigkeit des Granulats in den Trockner und aus diesem heraus zu erhöhen und um zu bewirken, dass das aus dem Trockner austretende PET-Granulat hinreichend Innenwärme für eine Selbstkristallisation des Granulats aufweist.

2. Verfahren nach Anspruch 1, **dadurch gekennzeichnet, dass** das aus dem Trockner austretende PET-Granulat durch eine Vibrationsanlage (84) in Bewegung gehalten wird, währenddessen das PET-Granulat weiter selbstkristalliert.

3. Verfahren nach Anspruch 1, **dadurch gekennzeichnet, dass** das Einspritzen des reaktionsträgen Gases hoher Geschwindigkeit in den Wasser- und Granulatschlicker das Wasser in einen Wasserdampfnebel umwandelt.

4. Verfahren nach Anspruch 1, **dadurch gekennzeichnet, dass** das PET-Granulat den Trockner bei einer mittleren Temperatur von über etwa 125°C und vorzugsweise über 135°C verlässt.

5. Verfahren nach Anspruch 1, **dadurch gekennzeichnet, dass** das Gas bei einer Geschwindigkeit von mindestens 100 m³/Stunde und vorzugsweise bei etwa 175 m³/Stunde in den Wasser- und Granulatschlicker eingespritzt wird.

6. Verfahren nach Anspruch 1, **dadurch gekennzeichnet, dass** das Gas Luft ist, die bei einer Geschwindigkeit von 100 bis 175 m³/Stunde eingespritzt wird.

7. Verfahren nach Anspruch 1, **dadurch gekennzeichnet, dass** das Gas im Wesentlichen ausgerichtet mit einer Fortbewegungslinie des Schlickers in den Wasser- und Granulatschlicker eingespritzt wird.

8. Verfahren nach Anspruch 7, **dadurch gekennzeichnet, dass** die Fortbewegungslinie des Schlickers bei einem Winkel zwischen 30°C und 60°C abbiegt und das Gas bei der Abbiegung eingespritzt wird.

9. Verfahren nach Anspruch 6, **dadurch gekennzeichnet, dass** die Verweilzeit des Granulats in der Schlickerleitung durch ein Kugelventil (150) stromabwärts der Lufteinspritzung reguliert wird.

10. Vorrichtung für die Verarbeitung von PET-Polymeren zu selbstkristalliertem Granulat, welche einen Unterwassergranulator (12, 102) zum Schneiden der in den Granulator extrudierten PET-Polymerstränge zu Granulat, Rohre (26, 104) zur Einleitung von Wasser in den Granulator und eine Schlickerleitung (28, 30, 106, 116) zum Befördern eines Wasser- und Granulatschlickers aus dem Granulator heraus und in einen Trockner (32, 108) umfasst, **dadurch gekennzeichnet, dass** eine Einspritzdüse (120) ein reaktionsträges Gas hoher Geschwindigkeit in die Wasser- und PET-Granulat-Schlicker-Leitung (116) einleitet, um das Wasser in den Rohren von dem Granulat zu trennen und die Geschwindigkeit des Granulats in den und aus dem Trockner zu erhöhen und um zu bewirken, dass das aus dem Trockner austretende PET-Granulat eine hinreichende Innenwärme für die Selbstkristallisation des Granulats aufweist.

11. Vorrichtung nach Anspruch 10, **dadurch gekennzeichnet, dass** das reaktionsträge Gas hoher Geschwindigkeit das Wasser in der Schlickerleitung zu einem Wasserdampfnebel umwandelt.

12. Vorrichtung nach Anspruch 10, **dadurch gekennzeichnet, dass** das reaktionsträge Gas hoher Geschwindigkeit eine Geschwindigkeit von 100-175 m³/Stunde aufweist.

13. Vorrichtung nach Anspruch 10, **dadurch gekennzeichnet, dass** der Trockner ein Zentrifugaltrockner ist.

14. Vorrichtung nach Anspruch 13, **dadurch gekennzeichnet, dass** eine Postgranulatoranlage (84) Granulat von einem Auslass (34) des Trockners aufnimmt, um die Selbstkristallisation zu fördern.

15. Vorrichtung nach Anspruch 14, **dadurch gekennzeichnet, dass** die Postgranulatoranlage (84) eine Vibrationsanlage, vorzugsweise ein Vibrationsförderer, ist, welche das Granulat während der Kristallisation in Bewegung hält.

16. Vorrichtung nach Anspruch 14, **dadurch gekennzeichnet, dass** die Postgranulatoranlage (84) ein wärmeisolierender Behälter ist.

17. Vorrichtung nach Anspruch 10, **dadurch gekennzeichnet dass** ein Teil der Schückerieitung gerade und bei einem Winkel von 30° bis 60° nach oben gewinkelt ist.

18. Vorrichtung nach Anspruch 10, **dadurch gekennzeichnet, dass** die Schlickerleitung einen geraden Teil (116) umfasst und die Gaseinspritzdüse (120) das reaktionsträge Gas zu Beginn des geraden Teils einleitet und ein Kugelventil (150) zur Steuerung der Verweilzeit des Granulats in der Vorrichtung dient.

19. Vorrichtung nach Anspruch 10 **dadurch gekennzeichnet, dass** die Gaseinspritzdüse (120) das reaktionsträge Gas im Wesentlichen ausgerichtet zu einer Längsachse eines geraden Teils (116) der Schlickerleitung in den Wasser- und Granulatschlicker einleitet.

20. Vorrichtung nach Anspruch 10, **dadurch gekennzeichnet, dass** ein Kugelventil (150) stromabwärts der Gaseinspritzdüse (120) die Verweilzeit des PET-Granulats in der Vorrichtung reguliert.

## Revendications

1. Procédé pour le traitement de polymères PET pour obtenir des pellets en PET cristallins comportant les étapes consistant à extruder des brins de polymère PET à travers un plateau matrice (18) dans un granulateur sous l'eau (12, 102), couper les brins de polymère PET en pellets dans ledit granulateur, transporter lesdits pellets en PET hors dudit granulateur et dans un séchoir (32, 108) en tant que bouillie d'eau et de pellets et sécher lesdits pellets en PET dans ledit séchoir, **caractérisé en ce que** ladite étape consistant à transporter lesdits pellets en PET comporte l'injection d'un gaz inerte à haute vitesse dans ladite bouillie d'eau et de pellets pour accroître la vitesse desdits pellets pour l'entrée dans et la sortie dudit séchoir et pour amener lesdits pellets en PET sortant dudit séchoir à avoir suffisamment de chaleur interne pour l'auto-cristallisation desdits pellets.

2. Procédé selon la revendication 1, **caractérisé en ce que** lesdits pellets en PET sortant dudit séchoir sont maintenus en mouvement par une unité de vibration (84) tandis que lesdits pellets en PET continuent l'auto-cristallisation.

3. Procédé selon la revendication 1, **caractérisé en ce que** ladite injection du gaz inerte à haute vitesse dans ladite bouillie d'eau et de pellets convertit l'eau en une brume de vapeur d'eau.

4. Procédé selon la revendication 1, **caractérisé en ce que** lesdits pellets en PET sortent dudit séchoir à une température moyenne au-dessus d'environ 125 °C, et de préférence au-dessus de 135 °C.

5. Procédé selon la revendication 1, **caractérisé en ce que** ledit gaz est injecté dans ladite bouillie d'eau et de pellets à une vitesse d'au moins 100 m³/heure, et de préférence d'environ 175 m³/heure.

6. Procédé selon la revendication 1, **caractérisé en ce que** ledit gaz est de l'air injecté à une vitesse entre environ 100 et 175 m³/heure.

7. Procédé selon la revendication 1, **caractérisé en ce que** ledit gaz est injecté dans ladite bouillie d'eau et de pellets pratiquement en alignement avec une trajectoire de ladite bouillie.

8. Procédé selon la revendication 7, **caractérisé en ce que** ladite trajectoire de ladite bouillie tourne à un angle entre 30° et 60° et ledit gaz est injecté à ce virage.

9. Procédé selon la revendication 6, **caractérisé en ce que** ledit temps de séjour desdits pellets dans ladite conduite de bouillie est régulé par un robinet à bille (150) en aval de ladite injection d'air.

10. Dispositif pour le traitement de polymères PET pour obtenir des pellets auto-cristallisés comportant un granulateur sous l'eau (12, 102) pour couper des brins de polymère PET extrudés dans ledit granulateur en pellets, de la tuyauterie (26, 104) pour introduire de l'eau dans ledit granulateur et une conduite de bouillie (28, 30, 106, 116) pour transporter une bouillie d'eau et de pellets hors dudit granulateur et dans un séchoir (32, 108), **caractérisé en ce qu'**un injecteur (120) introduit du gaz inerte à haute vitesse dans ladite conduite de bouillie d'eau et de pellets PET (116) pour séparer l'eau des pellets dans la tuyauterie et accroître la vitesse desdits pellets pour l'entrée dans et la sortie dudit séchoir et pour amener lesdits pellets en PET sortant dudit séchoir à avoir suffisamment de chaleur interne pour l'auto-cristallisation desdits pellets.

11. Dispositif selon la revendication 10, **caractérisé en ce que** ledit gaz inerte à haute vitesse convertit l'eau dans ladite conduite de bouillie en une brume de vapeur d'eau.

12. Dispositif selon la revendication 10, **caractérisé en ce que** ledit gaz inerte haute vitesse injecté est à une vitesse entre environ 100 et 175 m³/heure.

13. Dispositif selon la revendication 10, **caractérisé en ce que** ledit séchoir est un séchoir centrifuge.

14. Dispositif selon la revendication 13, **caractérisé en ce qu'**une unité post-granulateur (84) reçoit des pellets d'une sortie (34) dudit séchoir pour faire avancer ladite auto-cristallisation.

15. Dispositif selon la revendication 14, **caractérisé en ce que** ladite unité post-granulateur (84) est une unité de vibration, de préférence un transporteur vibrant, qui maintient lesdits pellets en mouvement pendant ladite cristallisation.

16. Dispositif selon la revendication 14, **caractérisé en ce que** ladite unité post-granulateur (84) est un récipient à isolation thermique.

17. Dispositif selon la revendication 10, **caractérisé en ce qu'**une partie de ladite conduite de bouillie est droite et inclinée vers le haut à un angle entre 30° et 60°.

18. Dispositif selon la revendication 10, **caractérisé en ce que** ladite conduite de bouillie comporte une partie droite (116) et ledit injecteur de gaz (120) introduit ledit gaz inerte à un début de ladite partie droite, et un robinet à bille (150) sert à réguler le temps de séjour des pellets dans ledit dispositif.

19. Dispositif selon la revendication 10, **caractérisé en ce que** ledit injecteur de gaz (120) introduit ledit gaz inerte dans ladite bouillie d'eau et de pellets pratiquement en alignement avec un axe longitudinal d'une partie droite de la conduite de bouillie (116).

20. Dispositif selon la revendication 10, **caractérisé en ce qu'**un robinet à bille (150) en aval dudit injecteur de gaz (120) régule le temps de séjour des pellets en PET dans ledit dispositif.
